# FASCICULE DE BREVET EUROPEEN

(11) **EP 2 794 197 B1**
(45) Date de publication et mention de la délivrance du brevet: **27.04.2016**
(21) Numéro de dépôt: 12808830.9
(22) Date de dépôt: 21.12.2012
(51) Int. Cl.: B25J 9/02, B25J 21/02, G21F 7/04

(54) **DISPOSITIF DE MANIPULATION D'OBJETS EN BOITES A GANTS**
VORRICHTUNG ZUM HANDHABEN VON OBJEKTEN IN EINEM HANDSCHUHFACH
DEVICE FOR HANDLING OBJECTS IN A GLOVE BOX

(30) Priorité: 22.12.2011 FR 1162293
(43) Date de publication de la demande: 29.10.2014
(73) Titulaire: AREVA NC, 92400 Courbevoie (FR)
(72) Inventeur: DUVAL, Patrice, F-30400 Villeneuve Les Avignon (FR); MARCHAL, Jean-Jacques, F-34800 Lieuran-cabrieres (FR); COLLETTE, Luc, F-84270 Vedene (FR)
(74) Mandataire: Brevalex
(86) Numéro de dépôt international: PCT/EP2012/076806
(87) Numéro de publication internationale: WO 2013/093076

(56) Documents cités:
- EP-A2- 0 390 483
- FR-A1- 2 505 718
- US-A- 5 219 215
- US-A1- 2005 196 263

## Description

### DOMAINE TECHNIQUE ET ART ANTÉRIEUR

La présente invention se rapporte à un dispositif de manipulation d'objet en boîte à gants, plus particulièrement de manipulation de boîtes dans une boîte à gants d'une installation de fabrication de combustibles nucléaires, par exemple de boîtes remplies de plutonium.

La fabrication de combustible nucléaire requiert l'utilisation de boîtes à gants dans lesquelles sont confinés les appareils de manipulation des matériaux destinés à la fabrication des combustibles nucléaires et les appareils de fabrication de combustible par exemple sous la forme de pastilles.

Dans le cas de la fabrication du combustible MOX, la fabrication utilise de l'oxyde de plutonium, de l'oxyde de d'uranium et de la chamotte.

Le plutonium provient en particulier du retraitement des assemblages de combustibles nucléaires usagés ; celui-ci est stocké dans des boîtes étanches qui sont ensuite acheminées jusqu'à l'atelier ou l'usine de fabrication de combustible nucléaire.

Afin de manipuler ces boîtes, uh dispositif de manipulation confiné dans une boîte à gants est prévu, celui-ci permettant un déplacement à la fois selon un axe vertical et selon un axe horizontal de la boîte. Ce dispositif de manipulation, notamment après avoir récupéré la boîte qui est sortie d'un étui, la transporte jusqu'à une roue de vidage afin de vidanger la boîte.

Ce dispositif de manipulation comporte un chariot muni d'un panier pour accueillir la boîte d'oxyde de plutonium. Ce chariot est mobile horizontalement sur des rails et est mobile verticalement. Le déplacement horizontal se fait au moyen d'un moteur électrique et d'un système de type pignon/crémaillère, le pignon étant en prise directe avec l'arbre d'entraînement du moteur. De la même manière, le déplacement selon l'axe vertical du chariot est obtenu au moyen d'un moteur électrique. Les arbres des moteurs électriques font saillie vers le bas, notamment celui du moteur destiné au déplacement horizontal du chariot. Celui-ci porte directement le pignon qui engrène la crémaillère. Le nombre de pièces nécessaires est ainsi réduit.

Comme expliqué précédemment, ce dispositif est confiné dans une boîte à gants qui, dans le cas de manipulation des boîtes d'oxyde de plutonium, est une zone très irradiante. En cas de défaillance ou de panne du dispositif de manipulation, il n'est évidemment pas question qu'un opérateur pénètre dans la boîte à gants, toute opération de maintenance devant s'effectuer à travers des gants et des ronds de gants fixés aux parois de la boîte à gants. Par conséquent, toute opération de maintenance peut être relativement longue et fastidieuse si le dispositif n'est pas conçu de sorte à pouvoir être facilement démonté à partir de l'extérieur d'une boîte à gants. En outre, en cas de panne d'un moteur ou de panne électrique, il est souhaitable de pouvoir continuer à déplacer les chariots verticalement et/ou horizontalement afin de pouvoir soit terminer l'opération soit pouvoir récupérer la boîte de plutonium.

Or, la structure du dispositif de manipulation telle que décrite précédemment ne permet pas un retour manuel du chariot dans une position initiale du fait de la prise directe du moteur de déplacement horizontal avec le pignon du système pignon/crémaillère. Par ailleurs, le démontage des moteurs est relativement fastidieux, les moteurs étant situés en bas du dispositif de manipulation, zone difficilement accessible.

Le document US5219215 décrit une boîte à gants comportant un tapis roulant et une pince pour réaliser différentes tâches sur des objets, la pince est déplaçable dans plusieurs directions au moyen de servomoteurs.

### EXPOSÉ DE L'INVENTION

C'est par conséquent le but de la présente invention d'offrir un dispositif de manipulation d'objets dans des endroits confinés dont la structure permet une maintenance facilitée et permet de déplacer les objets manuellement, par exemple en cas de défaillance.

Le but précédemment énoncé est atteint par un dispositif de manipulation comportant un chariot déplaçable au moins horizontalement sur des rails, ce chariot comportant un panier pour recevoir un objet, par exemple une boîte d'oxyde de plutonium, un moteur électrique, un ensemble pignon/crémaillère, le pignon étant entraîné en rotation par le moteur électrique, le moteur électrique étant orienté de telle sorte que son arbre soit disposé verticalement et fasse saillie vers le haut du dispositif, à l'opposé de l'ensemble pignon/crémaillère, la transmission de l'entraînement générée par le moteur électrique étant réalisé au moyen d'un arbre de transmission s'étendant parallèlement à l'axe du moteur électrique entre la partie haute du dispositif et la partie basse du dispositif où se situe l'ensemble pignon/crémaillère, l'arbre du moteur et l'arbre de transmission étant reliés par une moyen de transmission, des moyens de débrayage étant également prévus pour permettre une manipulation manuelle de l'ensemble pignon/crémaillère par l'intermédiaire de l'arbre de transmission.

En d'autres termes, le moteur électrique n'est plus en prise directe avec le pignon/crémaillère ce qui permet de manipuler manuellement le chariot et, en outre, la disposition du moteur dans la partie supérieure permet son retrait aisé en cas de panne de celui-ci, et la commande manuelle est aisément accessible à partir du haut. Ce dispositif comporte plus d'éléments que le dispositif de manipulation de l'état de la technique ; cependant, il permet une maintenance aisée et un gain de temps très important.

De plus, le dispositif de l'état de la technique souffrait d'un hyperstatisme du fait notamment du fait de la prise directe du moteur électrique avec le pignon, ce qui pouvait provoquer des points durs et poser des problèmes de détection des pannes. Désormais, grâce au dispositif selon la présente invention, cet hyperstatisme est supprimé, la détection de panne est alors plus rapide.

De manière très avantageuse, le chariot est également déplaçable selon un axe vertical au moyen d'un moteur électrique ; de préférence, celui-ci est disposé parallèlement au moteur de déplacement horizontal, son arbre d'entraînement faisant saillie vers le haut du dispositif de manière similaire à l'arbre de déplacement horizontal.

Ce moteur est également équipé d'un système de débrayage permettant une manipulation manuelle du chariot selon la position verticale.

Très avantageusement, les différents éléments sont montés au moyen de dispositifs à boutonnières permettant l'utilisation de vis imperdables, ce qui facilite le montage et le démontage avec une seule main des différents éléments et d'obtenir des gains de maintenance.

La présente invention a alors pour objet un dispositif de manipulation d'objets en boîte à gants comportant un chariot pour supporter les objets à manipuler, une base par rapport à laquelle le chariot est mobile le long d'un premier axe, un châssis également mobile le long du premier axe, des moyens d'entraînement du chariot le long du premier axe, lesdits moyens d'entraînement comportant un premier moteur électrique fixé sur le châssis, de sorte que son arbre d'entraînement soit orthogonal au premier axe et fasse saillie à l'opposé de la base, un arbre de transmission fixé sur le châssis parallèlement au premier moteur, des moyens pour transmettre la rotation de l'arbre d'entraînement à l'arbre de transmission, une crémaillère fixée sur la base le long du premier axe et un pignon en prise directe avec l'arbre de transmission et engrenant la crémaillère, les moyens de déplacement le long du premier axe comportant également des moyens de débrayage entre le premier moteur et l'arbre de transmission et des moyens de commande manuelle de sorte à permettre un déplacement du chariot le long du premier axe sans utiliser le premier moteur électrique.

Des moyens pour transmettre la rotation de l'arbre d'entrainement du premier moteur électrique à l'arbre de transmission sont avantageusement formés par une courroie de transmission.

Par exemple, les moyens de débrayage comportent une poulie de débrayage et des moyens escamotables pour la rendre solidaire en rotation d'une poulie d'entraînement en prise avec l'arbre d'entraînement du premier moteur électrique, la courroie reliant la poulie de débrayage et l'arbre de transmission, ladite poulie de débrayage comportant une manivelle pour entraîner en rotation lorsqu'elle est désolidarisée de la poulie d'entraînement.

De manière avantageuse, le chariot peut être déplaçable le long d'un deuxième axe et dans lequel ledit dispositif comporte des moyens de déplacement du chariot le long du deuxième axe, lesdits moyens de déplacement comportant un deuxième moteur électrique fixé sur le châssis de telle sorte que son arbre d'entraînement soit orthogonal au premier axe et fasse saillie à l'opposé de la base, des moyens de conversion pout convertir la rotation du moteur électrique en un mouvement de translation du chariot le long du deuxième axe, des moyens pour transmettre la rotation de l'arbre d'entraînement du deuxième moteur électrique aux moyens de conversion, lesdits moyens de déplacement selon le deuxième axe comportant également des moyens de débrayage entre le deuxième moteur et les moyens de conversion et des moyens de commande manuelle desdits moyens de conversion.

De préférence, les moyens de conversion sont formés par une vis à billes.

Les moyens pour transmettre la rotation de l'arbre d'entraînement du deuxième moteur électrique au moyen de conversion sont avantageusement formés par une courroie de transmission.

Par exemple, les moyens de débrayage comportent une poulie de débrayage et des moyens escamotables pour la rendre solidaire en rotation d'une poulie d'entraînement en prise avec l'arbre d'entraînement du deuxième moteur électrique, la courroie reliant la poulie de débrayage et la vis à billes, ladite poulie de débrayage comportant une manivelle pour entraîner en rotation lorsqu'elle est désolidarisée de la poulie d'entraînement.

Le dispositif peut comportert au moins une colonne de guidage du déplacement du chariot le long du deuxième axe.

De préférence le premier axe est horizontal et le deuxième axe est vertical.

La base comporte avantageusement des rails de guidage le long du premier axe, le chariot comportant des galets de guidage coopérant avec lesdits rails.

Dans un exemple de réalisation, le châssis peut présenter une forme sensiblement plane orientée verticalement et le premier moteur électrique est suspendu à une console fixée sur une face latérale du châssis.

L'arbre de transmission est avantageusement monté au moyen de deux paliers sur une face latérale du châssis à l'opposé de la face à laquelle le premier moteur électrique est suspendue, lesdits paliers étant fixés de manière amovible sur le châssis.

Le deuxième moteur électrique peut être suspendu à une console fixée sur une face latérale du châssis.

De préférence, la vis à billes et les colonnes de guidage sont montées sur la même face latérale du châssis que celle sur laquelle est monté l'arbre de transmission.

Le chariot comporte avantageusement au moins un panier destiné à recevoir une boîte, ledit panier comportant deux parois latérales se faisant face et délimitant un logement apte à recevoir la boîte, ledit logement comportant au moins une ouverture latérale et un fond muni d'un évidement, chacune des parois latérales comportant un support horizontal destiné à supporter verticalement la boîte.

La boîte peut être cylindrique à section circulaire, les parois latérales ont alors une section en forme d'arc de cercle de sorte à délimiter un logement de diamètre intérieur correspondant au diamètre extérieur de la boîte.

Le dispositif peut comporter un moyen élévateur destiné à mettre en place la boîte dans le panier, l'élévateur comportant un arbre télescopique le long d'une direction verticale et un support solidaire de l'arbre ayant une forme complémentaire de la forme de l'évidement du fond du panier.

### BRÈVE DESCRIPTION DES DESSINS

La présente invention sera mieux comprise à l'aide de la description qui va suivre et des dessins en annexe sur lesquels :
- la figure 1 est une vue en perspective d'un exemple de réalisation d'un dispositif de manipulation selon la présente invention,
- les figures 2A et 2B sont des représentations schématiques du panier monté sur le chariot du dispositif de la figue 1 et d'un système élévateur pour mettre en place la boîte dans le panier respectivement,
- la figure 2C est une vue de dessus du panier et de l'élévateur dans un état de mise en place d'une boîte, la boîte étant représentée en pointillés.

### EXPOSÉ DÉTAILLÉ DE MODES DE RÉALISATION PARTICULIERS

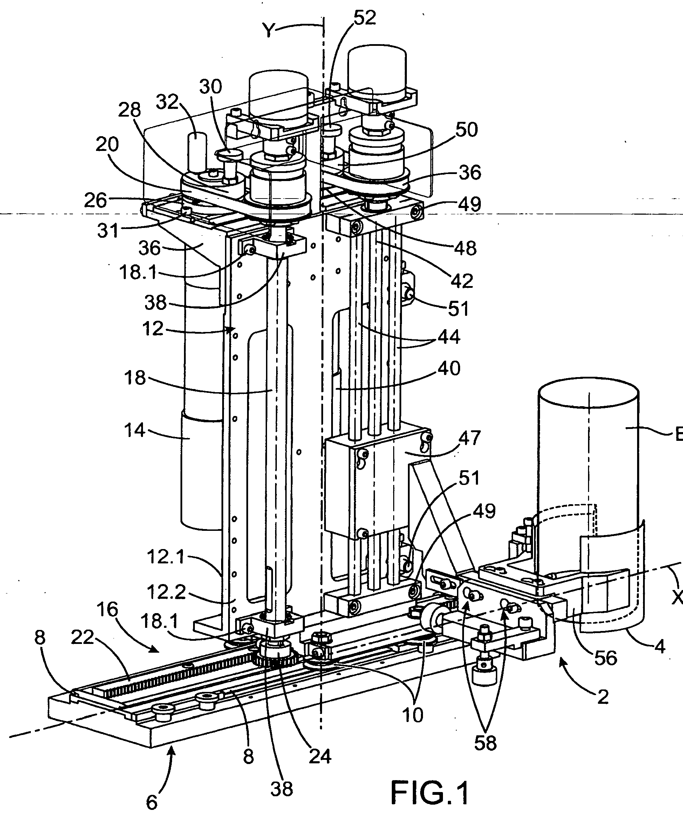

Sur la figure 1, on peut voir une vue en perspective d'un exemple de réalisation d'un dispositif de manipulation selon la présente invention.

Ce dispositif de manipulation est notamment destiné à manipuler des objets dans un espace confiné, tel qu'une boîte à gants d'une installation de fabrication de combustible nucléaire. Les objets à déplacer sont par exemple des boîtes remplies d'oxyde de plutonium en vue de la fabrication de pastilles de combustible MOX. Dans la suite de la description, la boîte d'oxyde de plutonium sera l'objet manipulé, mais il sera compris que ce dispositif peut déplacer tout autre objet.

Le dispositif de manipulation de la figure 1 comporte un chariot 2 muni d'un panier 4 dans lequel est, représentée en pointillés, une boîte cylindrique contenant de l'oxyde de plutonium. Cette boîte est désignée B.

Le dispositif de manipulation comporte une base 6 munie de rails 8 pour le guidage linéaire du chariot 2 le long d'un axe X horizontal. Le chariot 2 comporte des moyens de coopération avec les rails 8. De manière très avantageuse, il s'agit de galets de guidage 10, ces galets présentent l'avantage d'être moins sensibles à la présence de poussières que d'autres systèmes tels que les patins à billes.

Dans l'exemple représenté, le chariot 2 est déplaçable selon l'axe X et selon un axe Y perpendiculaire à l'axe X et orienté verticalement. Un dispositif de manipulation n'offrant qu'un déplacement selon l'axe horizontal ne sort pas du cadre de la présente invention.

Le dispositif de manipulation comporte un châssis vertical 12, ce châssis étant déplaçable horizontalement avec le chariot.

Le dispositif de manipulation comporte des moyens de déplacement selon l'axe horizontal X formés par un premier moteur électrique 14 dont l'axe Y1 est orienté verticalement, un ensemble pignon-crémaillère 16, un arbre de transmission 18 et une courroie 20, l'ensemble courroie 20 et l'arbre de transmission 18 transmettant le mouvement de rotation de l'arbre du moteur électrique 14 à l'ensemble pignon-crémaillère 16. L'utilisation d'une courroie pour transmettre l'entraînement du moteur électrique 14 à l'arbre de transmission 18 offre l'avantage d'avoir un dispositif peu sensible aux poussières. En outre, elle simplifie les opérations de démontage et remontage.

Alternativement, une transmission par chaîne est envisageable.

L'ensemble pignon-crémaillère 16 comporte une crémaillère 22 d'axe X et solidaire de la base 6 et un pignon 24 en prise directe avec l'arbre de transmission 18 et engrenant la crémaillère 22.

Le premier moteur électrique 14 est fixé sur le châssis vertical 12 en position haute, l'arbre du moteur électrique 14 faisant saillie vers le haut du dispositif à l'opposé de la base 6 portant l'ensemble pignon-crémaillère.

De manière très avantageuse, des moyens de débrayage entre le premier moteur électrique 14 et l'arbre de transmission 18 sont prévus et des moyens d'entrainement manuel de l'arbre de transmission 18 sont également prévus-afin de pouvoir déplacer le chariot 2 horizontalement en cas de panne du premier moteur électrique.

Les moyens de débrayage sont formés par une poulie moteur 26 en prise directe avec l'arbre du moteur 14 et une poulie de débrayage 28 qui, en fonctionnement normal, est entrainée par la poulie moteur 26 par l'intermédiaire d'un doigt de verrouillage 30 traversant la poulie de débrayage 28 et pénétrant dans la poulie moteur 26. La courroie d'entrainement 20 est entraînée en rotation par la poulie de débrayage 28.

La poulie de débrayage 28 comporte avantageusement également une manivelle 32 en saillie verticalement de la poulie de débrayage 28 vers le haut, permettant de faire tourner la poulie de débrayage 28 autour de son axe en cas de panne du moteur électrique 14, ou pour toute autre raison nécessitant une manipulation manuelle du chariot le long de l'axe X.

L'opérateur exerce un effort sur le doigt de verrouillage 30 vers le haut de sorte à retirer son extrémité de la poulie moteur 26 et à désolidariser la poulie de débrayage 28 de la poulie moteur 26.

l'opérateur fait ensuite tourner la poulie de débrayage 28 autour de son axe par l'intermédiaire de la manivelle 32, provoquant ainsi l'entraînement de la courroie de transmission 20, de l'arbre de transmission 18 et du pignon 24 qui engrène la crémaillère 22. Le chariot 2 est ainsi déplacé manuellement le long de l'axe X. Le sens de déplacement du chariot 2 dépend du sens de rotation de la poulie de débrayage 28. Cette réalisation offre l'avantage qu'aucune pièce n'a besoin d'être retirée, évitant un risque que celle-ci ne chute dans la boîte à gant lors de son retrait et perturbe le fonctionnement du dispositif.

On pourrait également envisager de faire tourner directement sur lui-même l'arbre de transmission sans passer par la poulie de débrayage et par la courroie de transmission. Pour cela, on pourrait par exemple retirer la courroie de transmission, ce qui éviterait de devoir recourir à une poulie de débrayage.

Cependant le temps d'intervention serait augmenté.

Le premier moteur 14 est suspendu au châssis vertical 12 au moyen d'une console 36 fixée sur une face 12.1 du châssis vertical 12. Le maintien du moteur 14 sur la console 36 se fait par l'intermédiaire de vis 31, facilement accessibles par le haut du dispositif et permettant un retrait aisé de ce moteur 14.

L'arbre de transmission est fixé de manière très avantageuse, par l'intermédiaire de deux paliers 38 sur le châssis vertical 12 sur une face 12.2 opposée à celle 12.1 sur laquelle est fixé le moteur électrique 14. Les paliers sont fixés sur le châssis vertical par l'intermédiaire de vis 18.1 également facilement accessibles par un opérateur par l'intermédiaire de ronds de gants de la boîte à gants. Le premier moteur 14 est facilement démontable, ainsi que l'arbre de transmission 18.

Dans l'exemple représenté et de manière avantageuse, le dispositif de manipulation comporte également des moyens de déplacement du chariot 2 le long de l'axe vertical Y comportant un deuxième moteur électrique 40, et une vis à billes 42 dans l'exemple représenté. Un système poulie-courroie avec entraînement par pignon ou tout autre moyen entraîné par un moteur électrique pour déplacer verticalement le chariot pourrait également être utilisé.

Comme on peut le voir sur la figure 1 et de manière avantageuse, le dispositif comporte deux colonnes 44 de guidage vertical de part et d'autre de la vis à billes pour guider verticalement le chariot 2.

De manière très avantageuse et de manière similaire au montage du premier moteur électrique 14, le deuxième moteur électrique 40 est disposé verticalement, parallèlement au premier moteur 14, son arbre d'entraînement faisant saillie vers le haut du dispositif de manipulation et étant relié à la vis à billes 42 par l'intermédiaire d'une courroie 36. Des moyens de débrayage et de commande manuels sont également avantageusement prévus entre le deuxième moteur 40 et la vis à billes 42 afin de permettre un déplacement manuel le long de la direction verticale Y.

Le chariot 2 est solidarisé à la vis à billes par une table linéaire de guidage 47, coulissant le long des colonnes de guidage. De manière similaire aux moyens de débrayage et de déplacement manuel du chariot le long de la direction horizontale, d'autres moyens de débrayage et de déplacement peuvent être envisagés.

De manière très avantageuse, l'ensemble vis à billes et colonnes de guidage sont fixées latéralement sur le châssis vertical 12 au moyen de vis 49 facilement accessibles par un opérateur, sur la même face que l'arbre de transmission 18. Le deuxième moteur 40 est également avantageusement fixé sur le châssis de manière suspendue à une console (non visible) sur la même face du châssis 12 que le premier moteur 14, les vis fixant celui-ci étant également accessibles par le haut du dispositif.

Les moyens de débrayage du deuxième moteur 40 sont formés par une poulie moteur 48 en prise directe avec l'arbre du moteur 40 et une poulie de débrayage 50 qui, en fonctionnement normal, est entraînée par la poulie moteur 48 par l'intermédiaire d'un doigt de verrouillage 52 traversant la poulie de débrayage 50 et pénétrant dans la poulie moteur 48. La courroie d'entraînement 36 est entraînée en rotation par la poulie de débrayage 50. La poulie de débrayage 50 comporte également une manivelle (non visible) en saillie verticalement de la poulie de débrayage 50 vers le haut, permettant de faire tourner la poulie de débrayage 50 autour de son axe.

Le déplacement manuel du chariot le long de la position verticale étant similaire au déplacement manuel le long de la position horizontale, celui-ci ne sera pas décrit à nouveau.

La disposition du premier moteur et de l'arbre de transmission de part et d'autre du châssis vertical 12 n'est en aucun cas limitative. On pourrait par exemple prévoir que le moteur 14 et l'arbre de transmission soient du même côté du châssis. Pour le moteur 40 et la vis à billes, la disposition décrite et représentée n'est également en aucun cas limitative.

Toutefois, la configuration du dispositif telle que représentée offre l'avantage d'une certaine compacité, équilibre les charges de part et d'autre du châssis et assure une très grande accessibilité aux différentes pièces.

Nous allons maintenant décrire en détail le panier 4 recevant la boîte d'oxyde de plutonium B.

Sur la figure 1, on peut voir que le panier est fixé par l'intermédiaire d'une chape 56 sur le chariot 2, et au moyen de boutonnières et de vis imperdables 58 permettant sa mise en place et son réglage en position de manière aisée.

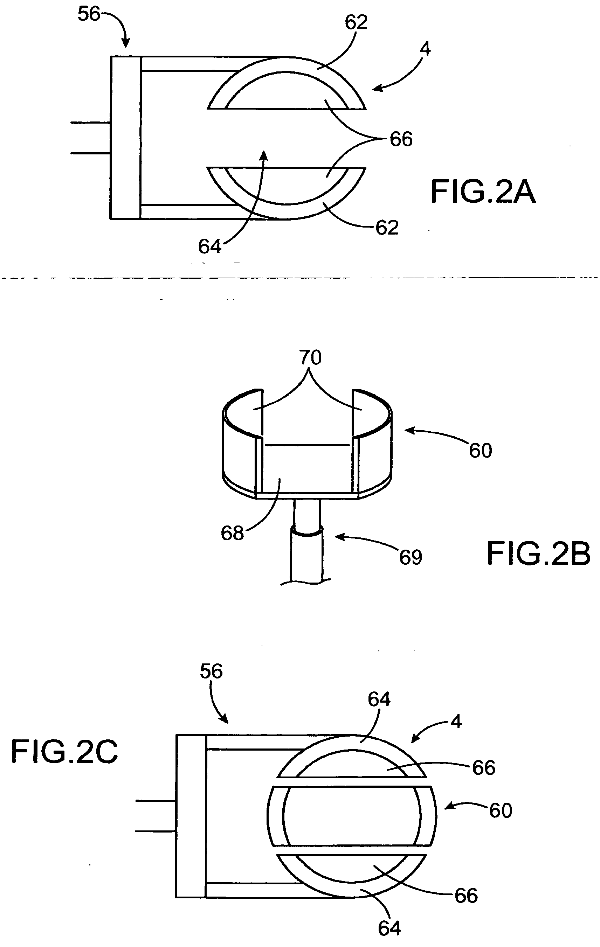

Sur les figures 2A et 2C, on peut voir des représentations schématiques du panier 4 vu de dessus, et sur la figure 2B on peut voir une représentation schématique d'un dispositif élévateur 60 de boîte permettant la mise en place et le retrait d'une boîte B dans le panier 4.

Comme on peut le voir sur la figure 2A, le panier comporte deux parois latérales 62 dont la section est en forme d'arc de cercle et un fond évidé 64, le fond étant formé par deux portions 66 solidaires des extrémités basses des parois latérales 62 de sorte que l'évidement du fond présente sensiblement une forme rectangulaire, les portions 66 supportant les extrémités latérales du fond de la boîte B. Chacune des parois latérales 66 du panier est fixée sur un bras de la chape 56 de sorte que les deux parois latérales 62 se fassent face et délimitent vues de dessus un logement de section circulaire dont les dimensions intérieures correspondent aux dimensions extérieures de la boîte B.

Sur la figure 2B, on peut voir une vue schématique d'un élévateur 60 de boîte permettant la mise en place et le retrait de la boîte B dans le panier 4. L'élévateur 60 comporte un support 68 et un arbre télescopique 69 d'axe vertical solidaire du support et le déplaçant verticalement. Le support 68 a une forme sensiblement rectangulaire délimité à deux extrémités par deux parois d'extrémité 70 en forme d'arc de cercle de faible hauteur, dont les dimensions correspondent à l'espace évidé du fond 64 du panier 4 permettant son logement dans cet espace évidé comme on peut le voir représenté schématiquement sur la figure 2C. Le support 68 délimite avec les parois latérales 62 un espace de dimensions intérieures correspondant aux dimensions extérieures de la boîte B, plus particulièrement au diamètre du fond de la boîte B.

Nous allons maintenant expliquer une étape de mise en place de la boîte B dans le panier à partir d'un élévateur 60. La boîte B est chargée sur le support 68 de l'élévateur 60. L'arbre 69 de l'élévateur est déployé de sorte que le support chargé de la boîte B prenne une position suffisamment haute et de sorte que les deux parois latérales 62 du panier 4 puissent être disposées de part et d'autre de l'arbre télescopique 69 de l'élévateur. Le panier se déplace en direction de l'arbre de sorte que les deux parois latérales 62 du panier soient situées de part et d'autre de l'arbre télescopique 69. Dans cette position, la boîte B est située au-dessus du panier et l'arbre 69 traverse le fond évidé du panier. Ensuite, l'élévateur s'abaisse, ce qui a pour effet de disposer la boîte B entre les parois latérales et sur le fond du panier 4. En poursuivant sa descente, l'élévateur est libéré de la boîte qui repose entièrement sur le fond du panier.

Alternativement, on peut imaginer que ce soit le panier porté par le chariot qui se déplace verticalement vers le haut pour venir supporter la boîte et l'écarter du support de l'élévateur. Le panier et l'élévateur permettent de manière très simple de transférer la boîte B sans nécessiter de réglages importants et évitant toute interaction entre l'élévateur et les paniers qui pourraient être préjudiciable au bon fonctionnement du dispositif.

La forme du panier n'est en aucun cas limitative. En outre, on peut envisager de manipuler plusieurs objets en même temps. Par exemple, la boîte pourrait avoir une section carrée ou en forme d'ellipse, le panier serait alors adapté à cette forme.

Le dispositif de manipulation est avantageusement équipé de capteurs permettant de détecter les positions verticale et horizontale du chariot ; concernant le déplacement vertical du chariot, ces capteurs sont par exemple de type inductif, ils sont référencés 51 sur la figure 1 et sont fixés sur le châssis vertical 12 du même côté que les colonnes de guidage. Ces capteurs sont alors également facilement accessibles par un opérateur et peuvent être remplacés aisément en cas de panne.

Le dispositif de manipulation selon la présente invention offre donc une maintenance aisée en cas de panne ou de défaillance de l'un de ses éléments puisque sa structure rend tous ces éléments, en tout cas les éléments susceptibles de présenter une panne, facilement accessibles et facilement démontables d'une seule main par un opérateur agissant depuis l'extérieur d'une boîte à gants par l'intermédiaire de gants fixés sur des ronds de gants. En outre, il permet un déplacement manuel selon l'axe horizontal et selon l'axe vertical du chariot, assurant un retour en position repos du chariot permettant de terminer une étape et évitant ainsi d'interrompre une étape en cours d'exécution.

Ce dispositif de manipulation est utilisable dans tout type d'installation nécessitant une manipulation dans des endroits confinés difficilement accessibles et dont la maintenance peut être problématique et laborieuse.

## Revendications

1. Dispositif de manipulation d'objets en boîte à gants comportant un chariot (2) pour supporter les objets à manipuler, une base (6) par rapport à laquelle le chariot (2) est mobile le long d'un premier axe (X), des moyens d'entraînement du chariot (2) le long du premier axe (X), **caractérisé en ce que** le dispositif de manipulation comporte également un châssis (12) mobile le long du premier axe (X), un arbre de transmission (18) fixé sur le châssis (12), des moyens pour transmettre la rotation de l'arbre d'entraînement à l'arbre de transmission, une crémaillère (22) fixée sur la base (6) le long du premier axe (X) et un pignon (24) en prise directe avec l'arbre de transmission (18) et engrenant la crémaillère (22), **en ce que** lesdits moyens d'entraînement comportent un premier moteur électrique (14) fixé sur le châssis (12), de sorte que son arbre d'entraînement soit orthogonal au premier axe (X) et fasse saillie à l'opposé de la base (6), l'arbre de transmission (18) étant parallèle au premier moteur électrique (14), et **en ce que** les moyens d'entraînement le long du premier axe (X) comportent également des moyens de débrayage entre le premier moteur et l'arbre de transmission et des moyens de commande manuelle de sorte à permettre un déplacement du chariot (2) le long du premier axe (X) sans utiliser le premier moteur électrique (14).

2. Dispositif de manipulation selon la revendication 1, dans lequel des moyens pour transmettre la rotation de l'arbre d'entrainement du premier moteur électrique (14) à l'arbre de transmission (18) sont formés par une courroie de transmission (20).

3. Dispositif de manipulation selon la revendication 2, dans lequel les moyens de débrayage comportent une poulie de débrayage et des moyens escamotables pour la rendre solidaire en rotation d'une poulie d'entraînement en prise avec l'arbre d'entraînement du premier moteur électrique, la courroie (20) reliant la poulie de débrayage et l'arbre de transmission (18), ladite poulie de débrayage comportant une manivelle pour entraîner en rotation lorsqu'elle est désolidarisée de la poulie d'entraînement.

4. Dispositif de manipulation selon l'une des revendications 1 à 3, dans lequel le chariot (2) est déplaçable le long d'un deuxième axe (Y) et dans lequel ledit dispositif comporte des moyens de déplacement du chariot (2) le long du deuxième axe (Y), lesdits moyens de déplacement comportant un deuxième moteur électrique (40) fixé sur le châssis (12) de telle sorte que son arbre d'entraînement soit orthogonal au premier axe (X) et fasse saillie à l'opposé de la base (6), des moyens de conversion pour convertir la rotation du moteur électrique en un mouvement de translation du chariot le long du deuxième axe (Y), des moyens pour transmettre la rotation de l'arbre d'entraînement du deuxième moteur électrique aux moyens de conversion, lesdits moyens de déplacement selon le deuxième axe (Y) comportant également des moyens de débrayage entre le deuxième moteur et les moyens de conversion et des moyens de commande manuelle desdits moyens de conversion, les moyens de conversion étant avantageusement formés par une vis à billes (42).

5. Dispositif de manipulation selon la revendication 4, dans lequel des moyens pour transmettre la rotation de l'arbre d'entraînement du deuxième moteur électrique (40) au moyen de conversion sont formés par une courroie de transmission.

6. Dispositif de manipulation selon la revendication 5, dans lequel les moyens de débrayage comportent une poulie de débrayage et des moyens escamotables pour la rendre solidaire en rotation d'une poulie d'entraînement en prise avec l'arbre d'entraînement du deuxième moteur électrique, la courroie reliant la poulie de débrayage et la vis à biles (42), ladite poulie de débrayage comportant une manivelle pour entraîner en rotation lorsqu'elle est désolidarisée de la poulie d'entraînement.

7. Dispositif de manipulation selon l'une des revendications 4 à 6, comportant au moins une colonne de guidage du déplacement du chariot (2) le long du deuxième axe (Y).

8. Dispositif de manipulation selon l'une des revendications 4 à 7, dans lequel le premier axe (X) est horizontal et le deuxième axe (Y) est vertical.

9. Dispositif de manipulation selon l'une des revendications 1 à 8, dans lequel le châssis présente une forme plane orientée verticalement et dans lequel le premier moteur électrique (14) est suspendu à une console fixée sur une face latérale du châssis (12).

10. Dispositif de manipulation selon la revendication 9, dans lequel l'arbre de transmission (18) est monté au moyen de deux paliers (38) sur une face latérale du châssis (12) à l'opposé de la face à laquelle le premier moteur électrique (14) est suspendu, lesdits paliers étant fixés de manière amovible sur le châssis (12).

11. Dispositif de manipulation selon l'une des revendications 1 à 10 en combinaison avec la revendication 4, dans lequel le deuxième moteur électrique est suspendu à une console fixée sur une face latérale du châssis (12).

12. Dispositif de manipulation selon la revendication 11 en combinaison avec la revendication 10, dans lequel la vis à billes (42) et les colonnes de guidage sont montées sur la même face latérale du châssis (12) que celle sur laquelle est monté l'arbre de transmission (18).

13. Dispositif de manipulation, selon l'une des revendications 1 à 12, dans lequel le chariot (2) comporte au moins un panier (4) destiné à recevoir une boîte (B), ledit panier comportant deux parois latérales (62) se faisant face et délimitant un logement apte à recevoir la boîte (B), ledit logement comportant au moins une ouverture latérale et un fond (64) muni d'un évidement, chacune des parois latérales (62) comportant un support horizontal (66) destiné à supporter verticalement la boîte.

14. Dispositif de manipulation selon la revendication 13, dans lequel la boîte (B) est cylindrique à section circulaire et dans lequel les parois latérales (62) ont une section en forme d'arc de cercle de sorte à délimiter un logement de diamètre intérieur correspondant au diamètre extérieur de la boîte.

15. Dispositif de manipulation selon la revendication 13 ou 14, comportant un moyen élévateur (60) destiné à mettre en place la boîte (B) dans le panier (4), l'élévateur comportant un arbre télescopique (69) le long d'une direction verticale et un support (68) solidaire de l'arbre ayant une forme complémentaire de la forme de l'évidement du fond du panier.

## Patentansprüche

1. Vorrichtung zum Handhaben von Gegenständen in einer Handschuhbox, umfassend einen Schlitten (2) zum Tragen der handzuhabenden Gegenstände, eine Basis (6), bezüglich der der Schlitten (2) entlang einer ersten Achse (X) beweglich ist, Mittel zum Antreiben des Schlittens (2) entlang der ersten Achse (X), **dadurch gekennzeichnet, dass** die Handhabungsvorrichtung ferner ein Gestell (12), das ebenfalls entlang der ersten Achse (X) beweglich ist, sowie eine Übertragungswelle (18), die an dem Gestell (12) befestigt ist, Mittel zum Übertragen der Drehung der Antriebswelle auf die Übertragungswelle umfasst, wobei eine Zahnstange (22) an der Basis (6) entlang der ersten Achse (X) befestigt ist, und ein Ritzel (24) in direktem Eingriff mit der Übertragungswelle (18) ist und mit der Zahnstange (22) kämmt, dass die Antriebsmittel einen ersten Elektromotor (14) umfassen, der an dem Gestell (12) derart befestigt ist, dass seine Antriebswelle orthogonal zur ersten Achse (X) ist und gegenüber der Basis (6) vorsteht, wobei die Übertragungswelle (18) parallel zum ersten Elektromotor befestigt ist, und dass die Antriebsmittel entlang der ersten Achse (X) ferner Mittel zum Auskuppeln zwischen dem ersten Motor und der Übertragungswelle sowie Mittel zur manuellen Steuerung derart umfassen, dass eine Verlagerung des Schlittens (2) entlang der ersten Achse (X) ohne Verwendung des ersten Elektromotors (14) ermöglicht wird.

2. Handhabungsvorrichtung nach Anspruch 1, bei der die Mittel zur Übertragung der Drehung der Antriebswelle des ersten Elektromotors (14) auf die Übertragungswelle (18) durch einen Übertragungsriemen (20) gebildet sind.

3. Handhabungsvorrichtung nach Anspruch 2, bei der die Auskupplungsmittel eine Auskupplungsrolle sowie einziehbare Mittel umfassen, um sie in Drehverbindung zu bringen mit einer Antriebsrolle in Eingriff mit der Antriebswelle des ersten Elektromotors, wobei der Riemen (20) die Auskupplungsrolle und die Übertragungswelle (18) verbindet, wobei die Auskupplungsrolle eine Kurbel zum Drehantrieb umfasst, wenn sie nicht mit der Antriebsrolle verbunden ist.

4. Handhabungsvorrichtung nach einem der Ansprüche 1 bis 3, bei der der Schlitten (2) entlang einer zweiten Achse (Y) verlagerbar ist, und bei der die Vorrichtung Mittel zur Verlagerung des Schlittens (2) entlang der zweiten Achse (Y) umfasst, wobei die Verlagerungsmittel einen zweiten Elektromotor (40) umfassen, der an dem Gestell (12) derart befestigt ist, dass seine Antriebswelle orthogonal zur ersten Achse (X) ist und gegenüber der Basis (6) vorsteht, ferner Umwandlungsmittel zum Umwandeln der Drehung des Elektromotors in eine Translationsbewegung des Schlittens entlang der zweiten Achse (Y), ferner Mittel zum Übertragen der Drehung der Antriebswelle des zweiten Elektromotors auf die Umwandlungsmittel, wobei die Mittel zur Verlagerung entlang der zweiten Achse (Y) ferner Mittel zum Auskuppeln zwischen dem zweiten Motor und den Umwandlungsmitteln sowie Mittel zur manuellen Steuerung der Umwandlungsmittel umfassen, wobei die Umwandlungsmittel vorzugsweise durch eine Kugelumlaufschraube (42) gebildet sind.

5. Handhabungsvorrichtung nach Anspruch 4, bei der die Mittel zur Übertragung der Drehung der Antriebswelle des zweiten Elektromotors (40) auf die Umwandlungsmittel durch einen Übertragungsriemen gebildet sind.

6. Handhabungsvorrichtung nach Anspruch 5, bei der die Auskupplungsmittel eine Auskupplungsrolle und zurückziehbare Mittel umfassen, um sie in Drehverbindung mit einer Antriebsrolle in Eingriff mit der Antriebswelle des zweiten Elektromotors zu bringen, wobei der Riemen die Auskupplungsrolle und die Kugelumlaufschraube (42) verbindet, wobei die Auskupplungsrolle eine Kurbel zum Drehantrieb umfasst, wenn sie nicht mit der Antriebsrolle verbunden ist.

7. Handhabungsvorrichtung nach einem der Ansprüche 4 bis 6, umfassend wenigstens eine Säule zur Führung der Verlagerung des Schlittens (2) entlang der zweiten Achse (Y).

8. Handhabungsvorrichtung nach einem der Ansprüche 4 bis 7, bei der die erste Achse (X) horizontal ist und die zweite Achse (Y) vertikal ist.

9. Handhabungsvorrichtung nach einem der Ansprüche 1 bis 8, bei der das Gestell eine vertikal orientierte ebene Form aufweist, und bei der der erste Elektromotor (14) an einer Konsole aufgehängt ist, die an einer Seitenfläche des Gestells (12) befestigt ist.

10. Handhabungsvorrichtung nach Anspruch 9, bei der die Übertragungswelle (18) mit Hilfe von zwei Lagern (38) an einer Seitenfläche des Gestells (12) gegenüber der Seite montiert ist, an der der erste Elektromotor (14) aufgehängt ist, wobei die Lager in lösbarer Weise an dem Gestell (12) befestigt sind.

11. Handhabungsvorrichtung nach einem der Ansprüche 1 bis 10 in Kombination mit Anspruch 4, bei der der zweite Elektromotor an einer Konsole aufgehängt ist, die an einer Seitenfläche des Gestells (12) befestigt ist.

12. Handhabungsvorrichtung nach Anspruch 11 in Kombination mit Anspruch 10, bei der die Kugelumlaufschraube (42) und die Führungssäulen an der gleichen Seitenfläche des Gestells (12) wie jene montiert sind, an der die Übertragungswelle (18) montiert ist.

13. Handhabungsvorrichtung nach einem der Ansprüche 1 bis 12, bei der der Schlitten (2) wenigstens einen Korb (4) umfasst, der dazu ausgelegt ist, einen Kasten (B) aufzunehmen, wobei der Korb zwei Seitenwände (62) umfasst, die sich gegenüber liegen und eine Aufnahme begrenzen, die dazu ausgelegt ist, den Kasten (B) aufzunehmen, wobei die Aufnahme wenigstens eine Seitenöffnung und einen Boden (64) umfasst, der mit einer Aussparung ausgestattet ist, wobei jede der Seitenwände (62) eine horizontale Abstützung (66) umfasst, die dazu ausgelegt ist, den Kasten vertikal abzustützen.

14. Handhabungsvorrichtung nach Anspruch 13, bei der der Kasten (B) zylindrisch mit kreisförmigen Querschnitt ist, und bei der die Seitenwände (62) einen Querschnitt in Form eines Kreisbogens haben, derart, dass eine Aufnahme mit einem Innendurchmesser entsprechend dem Außendurchmesser des Kastens begrenzt wird.

15. Handhabungsvorrichtung nach Anspruch 13 oder 14, umfassend ein Hebemittel (60), das dazu ausgelegt ist, den Kasten (B) in dem Korb (4) zu platzieren, wobei der Heber eine Teleskopwelle (69) entlang einer vertikalen Richtung und einer Abstützung (68) umfasst, die mit der Welle verbunden ist und eine Form hat, die komplementär ist zur Form der Aussparung des Korbbodens.

## Claims

1. Device for handling objects in a glove box comprising a carriage (2) to support the objects to be handled, a base (6) relative to which the carriage (2) can be moved along a first axis (X), drive means for driving the carriage (2) along the first axis (X), **characterized in that** the handling device also comprises a chassis (12) that can also be moved along the first axis (X), a transmission shaft (18) fixed to the chassis (12), means of transmitting rotation of the drive shaft to the transmission shaft, a rack (22) fixed onto the base (6) along the first axis (X) and a pinion (24) fixed in rotation to the transmission shaft (18) and engaging with the rack (22), **in that** said drive means comprise a first electric motor (14) fixed to the chassis (12), such that its drive shaft is orthogonal to the first axis (X) and projects from a side opposite with respect to the base (6), the transmission shaft (18) being parallel to the first electric motor (14), and **in that** the drive means along the first axis (X) also comprise declutching means between the first motor and the transmission shaft and manual control means to enable displacement of the carriage (2) along the first axis (X) without using the first electric motor (14).

2. Handling device according to claim 1, in which means of transmitting the rotation of the drive shaft from the first electric motor (14) to the transmission shaft (18) consist of a transmission belt (20).

3. Handling device according to claim 2, in which the declutching means comprise a declutching pulley and retractable means for fixing it in rotation with a drive pulley fixed in rotation to the drive shaft of the first electric motor, the belt (20) connecting the declutching pulley and the transmission shaft (18), said declutching pulley including a crank handle to drive it in rotation when it is no longer fixed to the drive pulley.

4. Handling device according to one of claims 1 to 3, in which the carriage (2) can be displaced along a second axis (Y) and in which said device comprises means of displacing the carriage (2) along the second axis (Y), said displacement means comprising a second electric motor (40) fixed onto the chassis (12) such that its drive shaft is orthogonal to the first axis (X) and projects opposite the base (6), conversion means for converting rotation of the electric motor into a translation movement of the carriage along the second axis (Y), means of transmitting rotation of the drive shaft from the second electric motor to the conversion means, said displacement means along the second axis (Y) also comprising declutching means between the second motor and the conversion means and manual control means of said conversion means, the conversion means consisting advantageously of a ball screw (42).

5. Handling device according to claim 4, in which the means of transmitting rotation of the drive shaft from the second electric motor (40) to the conversion means consist of a transmission belt.

6. Handling device according to claim 5, in which the declutching means comprise a declutching pulley and retractable means to fix it in rotation to a drive pulley fixed in rotation to the drive shaft of the second electric motor, the belt connecting the declutching pulley and the ball screw (42), said declutching pulley comprising a crank handle to rotate it when it is no longer fixed to the drive pulley.

7. Handling device according to one of claims 4 to 6, comprising at least one column to guide displacement of the carriage (2) along the second axis (Y).

8. Handling device according to one of claims 4 to 7, in which the first axis (X) is horizontal and the second axis (Y) is vertical.

9. Handling device according to one of claims 1 to 8, in which the chassis is plane in shape oriented vertically and in which the first electric motor (14) is suspended from a bracket fixed onto a side face of the chassis (12).

10. Handling device according to one of claims 1 to 9, in which the transmission shaft (18) is mounted by means of two bearing (38) on one side face of the chassis (12) opposite the face from which the first electric motor (14) is suspended, said bearing being fixed removably on the chassis (12).

11. Handling device according to one of claims 1 to 10 combined with claim 4, in which the second electric motor is suspended from a bracket fixed on a side face of the chassis (12).

12. Handling device according to claim 11 combined with claim 10, in which the ball screw (42) and the guide columns are mounted on the same lateral face of the chassis (12) as the face on which the transmission shaft is mounted (18).

13. Handling device according to one of claims 1 to 12, in which the carriage (2) comprises at least one basket (4) in which a box (B) will be placed, said basket comprising two sidewalls (62) facing each other and delimiting a housing suitable to contain the box (B), said housing comprising at least one lateral opening and a bottom (64) in which a recess is formed, each of the sidewalls (62) comprising a horizontal support (66) that will support the box vertically.

14. Handling device according to claim 13, in which the box (B) is cylindrical with a circular cross-section and in which the sidewalls (62) have a section in the form of an arc of a circle so as to delimit a housing with an inside diameter corresponding to the outside diameter of the box.

15. Handling device according to claim 13 or 14, comprising an elevating means (60) designed to put the box (B) into place in the basket (4), the elevator comprising a telescopic shaft (69) along a vertical direction and a support (68) fixed to the shaft with a shape complementary to the shape of the recess in the bottom of the basket.
